# EUROPEAN PATENT APPLICATION

(11) **EP 4 254 282 A1**
(43) Date of publication of application: **04.10.2023**
(21) Application number: 23156448.5
(22) Date of filing: 14.02.2023
(51) Int. Cl.: G06Q 10/02, G06Q 10/08, G06Q 50/28, G06Q 50/30, B64C 39/02, B64D 9/00, B64F 1/36

(54) **AIR TRANSPORTATION MANAGEMENT SYSTEM**

(30) Priority: 31.03.2022 JP 2022057934
(71) Applicant: Honda Motor Co., Ltd., Minato-ku Tokyo 107-8556 (JP)
(72) Inventor: ISHIKAWA, Katsumasa, Saitama 351-0193 (JP)
(74) Representative: Weickmann & Weickmann PartmbB

(57) **Abstract**

An air transportation management system (1) includes an individual information recognition unit (12) for recognizing individual information including a size and weight of each of air transportation objects scheduled for transportation by an aircraft, a related object information recognition unit (13) for recognizing information of related objects that are the air transportation objects associated with each other, a transportation reservation status recognition unit (14) for recognizing a transportation reservation status of each of the air transportation objects in an aircraft, a batch transportation propriety determination unit (15) for determining a presence or absence of an aircraft capable of batch transportation of all of the related objects based on the individual information and the transportation reservation status of each of the related objects, and an aircraft selection unit (16) for selecting an aircraft to transport the related objects based on a determination result by the batch transportation propriety determination unit.

## Description

### BACKGROUND OF THE INVENTION

### Field of the Invention

The present invention relates to an air transportation management system.

### Description of the Related Art

Conventionally, an aircraft transportation system has been proposed that determines a flight of an aircraft to transport passengers and luggage, and the arrangement of the passengers and luggage within the aircraft, by measuring a weight and size of each of the passengers and luggage transported by the aircraft (for example, refer to US Patent Application No. 2020/0387989). This aircraft transportation system performs a process to reorganize the passengers and luggage, in the case where there is an excess weight or a displacement in the arrangement within the aircraft of the passengers and luggage stored within the aircraft.

In the case where performing a reorganization of passengers and luggage transported in an aircraft, in accordance with only weight and size, such as in this aircraft transportation system, an inconvenience can occur, for example, in which a passenger and luggage carried by the passenger, or multiple passengers in a same group, are assigned to aircraft of different flights.

The present invention has been developed in consideration of such a background, and is aimed to provide an air transportation management system that can more appropriately perform distribution of multiple air transportation objects to aircraft.

### SUMMARY OF THE INVENTION

As an aspect for achieving this objective, an air transportation management system includes an individual information recognition unit for recognizing individual information including a size and weight of each of air transportation objects scheduled for transportation by an aircraft, a related object information recognition unit for recognizing information of related objects that are the air transportation objects associated with each other, a transportation reservation status recognition unit for recognizing a transportation reservation status of each of the air transportation objects in an aircraft, a batch transportation propriety determination unit for determining a presence or absence of an aircraft capable of batch transportation of all of the related objects based on the individual information and the transportation reservation status of each of the related objects, and an aircraft selection unit for selecting an aircraft to transport the related objects based on a determination result by the batch transportation propriety determination unit.

The air transportation management system may have a configuration in which in the case where the batch transportation propriety determination unit determines that there is no aircraft capable of batch transportation of the related objects, the aircraft selection unit selects a first aircraft capable of transportation of a portion of the related objects, and selects a second aircraft or another transportation means other than an aircraft capable of transportation of a remaining portion of the related objects.

The air transportation management system may have a configuration in which in the case where a transportation destination of the portion of the related objects by the first aircraft is a first site, and an arrival date/time to the first site of the portion of the related objects by the first aircraft is a first date/time, the aircraft selection unit selects the second aircraft or the another transportation means capable of transporting the remaining portion of the related objects at a second site having a distance with the first site within a predetermined distance, and at a second date/time having a time difference with the first date/time within a predetermined time.

The air transportation management system may have a configuration in which in the case where a user who has performed a transportation reservation of the related objects is included in the related objects, the aircraft selection unit preferentially assigns the user to the first aircraft complying with a desired use date/time by the transportation reservation.

The air transportation management system may have a configuration in which in the case where a user who has performed a transportation reservation of the air transportation objects, and luggage requested to be transported at the same time at the time of the transportation reservation or carried by the user, are included in the related objects, the aircraft selection unit selects the first aircraft capable of transportation of the user and the luggage.

The air transportation management system may have a configuration in which the individual information recognition unit recognizes the individual information by acquiring measurement information of a size and weight of each of the air transportation objects transmitted from a transportation vehicle for transporting the air transportation objects by land, the size and weight being obtained by measurement in the transportation vehicle.

The air transportation management system may have a configuration in which the individual information recognition unit recognizes the individual information by acquiring measurement information of a size and weight of each of the air transportation objects transmitted from a transportation vehicle for transporting the air transportation objects by land, the size and weight being obtained by measurement in the transportation vehicle, and the air transportation management system includes a related object transfer arrangement unit for arranging a transfer by the transportation vehicle of a portion of the related objects to a loading location of the first aircraft, and a transfer by the transportation vehicle of a remaining portion of the related objects to the second aircraft or the another transportation means, in the case where the first aircraft and the second aircraft or the another transportation means are selected by the aircraft selection unit.

According to the air transportation management system, distribution of multiple air transportation objects to aircraft can be more appropriately performed.

### BRIEF DESCRIPTION OF THE DRAWINGS

FIG. 1 is an explanatory view of a selection mode of aircraft by an air transportation management system;
FIG. 2 is a configuration view of the air transportation management system;
FIG. 3 is a flowchart of a reservation reception process;
FIG. 4 is a first flowchart of a selection process of aircraft for air transportation objects; and
FIG. 5 is a second flowchart of the selection process of aircraft for the air transportation objects.

### DETAILED DESCRIPTION OF THE PREFERRED EMBODIMENTS

### [1. Selection mode of aircraft]

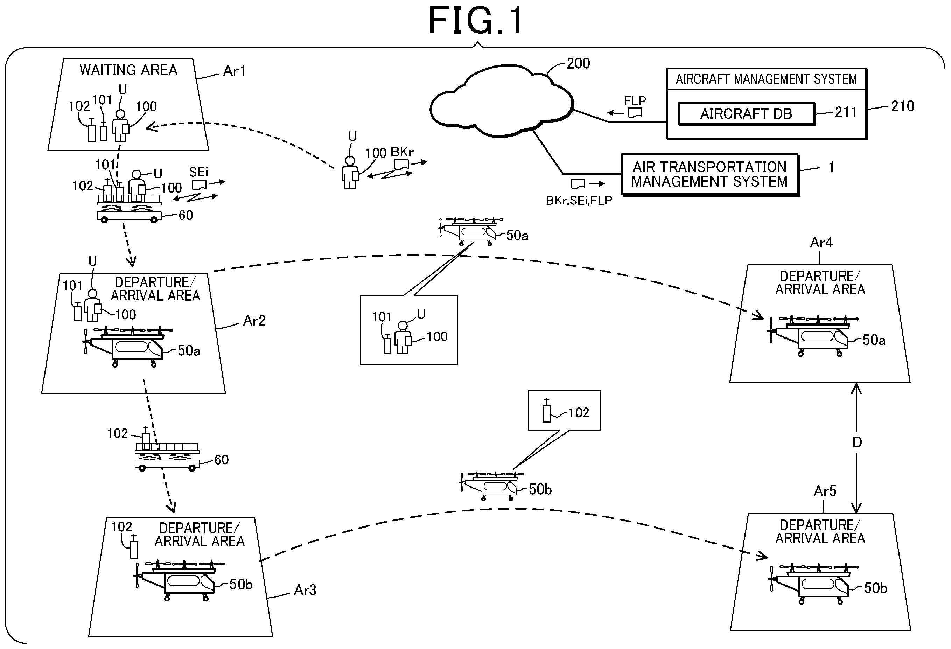

A selection mode of aircraft by an air transportation management system 1 of the present embodiment will be described, by referring to FIG. 1. The air transportation management system 1 performs a process for selecting an aircraft capable of transportation of a user U and luggage 101, 102 of the user U, by receiving an aircraft reservation request from the user U.

The air transportation management system 1 performs communication with an aircraft management system 210, a user terminal 100 used by the user U, and a transportation vehicle 60 for transporting the user U and the luggage 101, 102 of the user U, via a communication network 200. The aircraft management system 210 is a computer system that includes a processor, a memory and the like, and the aircraft management system 210 includes an aircraft database (DB) 211 in which information of a flight plan and a reservation status of each aircraft is recorded. The user terminal 100 is a smartphone, a mobile phone, a tablet terminal, a laptop computer, a desktop computer or the like.

The user U executes an aircraft reservation app (application program) installed in the user terminal 100, and the user U performs an aircraft reservation by accessing the air transportation management system 1. The user terminal 100 transmits reservation request information Bkr, which shows reservation conditions input by the user U with the reservation app, to the air transportation management system 1. A departure site, an arrival site, a departure time, an arrival time, the boarding passenger number, luggage and the like are included in the reservation conditions.

In FIG. 1, an example is shown, with one user U, in which the user U and his/her carried luggage 101, 102 are transported by a first aircraft 50a and a second aircraft 50b. The first aircraft 50a and the second aircraft 50b are aircraft of vertical takeoff and landing type such as Vertical Take-Off and Landing (VTOL) aircraft or the like, and the number of users that can be boarded is of the extent of several people.

The air transportation management system 1 recognizes the reservation conditions of the user U from the reservation request information Bkr, and the air transportation management system 1 arranges an aircraft reservation by extracting an aircraft conforming to the reservation conditions. The user U, who has finished the reservation, moves to a waiting area Arl, and then the user U heads towards a departure/arrival area Ar2 by boarding the transportation vehicle 60 along with the luggage 101, 102, at the waiting area Ar1.

A camera and weight sensor are provided in the transportation vehicle 60. The transportation vehicle 60 transmits a photographed image of the camera to the air transportation management system 1, and the air transportation management system 1 recognizes the user U and the luggage 101, 102 as related objects that are related to each other, from the reservation conditions and the photographed image of the camera. Moreover, the transportation vehicle 60 measures the size of each of the user U and the luggage 101, 102 by the photographed image of the camera, and the transportation vehicle 60 measures the weight of each of the user U and the luggage 101, 102 by the weight sensor. The transportation vehicle 60 transmits measurement information SEi, which shows measurement values of the size and weight of each of the user U and the luggage 101, 102, to the air transportation management system 1.

The air transportation management system 1 recognizes a reservation status of the aircraft reserved by the user U (hereinafter, called a reserved aircraft), by accessing the aircraft DB 211, and the air transportation management system 1 determines whether or not batch transportation of the user U and the luggage 101, 102 is possible by the reserved aircraft. In the case where batch transportation is possible, the user U boards the reserved aircraft along with the luggage 101, 102. In this case, a correspondence to distribution transportation by the air transportation management system 1, which will be described later, is not performed.

FIG. 1 exemplifies the case where the air transportation management system 1 determines that batch transportation of the user U and the luggage 101, 102 is not possible, and it is necessary to transport the luggage 102 by distributing to another aircraft. In this case, the air transportation management system 1 searches for another aircraft capable of transportation of the luggage 102, by acquiring aircraft information FLP, which shows a flight plan and a reservation status of each aircraft, by accessing the aircraft DB 211.

Specifically, the air transportation management system 1 searches for and extracts another second aircraft 50b, which satisfies the following first condition and second condition, with respect to the first aircraft 50a that is the reserved aircraft.

First condition: a distance D between a departure/arrival area Ar3 (corresponding to a first site of the present disclosure), which is an arrival site of the first aircraft 50a, and a departure/arrival area Ar4 (corresponding to a second site of the present application), which is an arrival site of the second aircraft 50b, is within a predetermined distance.

Second condition: a time difference between an arrival scheduled date/time (corresponding to a first date/time of the present application) of the first aircraft 50a to the arrival site Ar3, and an arrival scheduled date/time (corresponding to a second date/time of the present application) of the second aircraft 50b to the arrival site Ar3, is within a predetermined time.

The air transportation management system 1 extracts the second aircraft 50b by such a process, and the air transportation management system 1 arranges a correspondence for separately transporting the user U and the luggage 101, 102, by the first aircraft 50a and the second aircraft 50b. In FIG. 1, an example is shown in which the user U and the luggage 101 are transported by the first aircraft 50a, and the luggage 102 is transported by the second aircraft 50b.

The transportation vehicle 60 travels to the departure/arrival area Ar2, by having the user U and the luggage 101, 102 loaded on at the waiting area Ar1, and at the departure/arrival area Ar2, the transportation vehicle 60 drops off the user U who is to board the first aircraft 50a, and the luggage 101 loaded onto the first aircraft 50a. Next, the transportation vehicle 60 travels to the departure/arrival area Ar3, and at the departure/arrival area Ar3, the transportation vehicle 60 drops off the luggage 102 loaded onto the second aircraft 50b. In this way, transshipment work or the like of the luggage 101, 102 can be reduced, by collectively performing movement of the user U and the luggage 101, 102, which are the related objects, by the one transportation vehicle 60.

### [2. Configuration of air transportation management system]

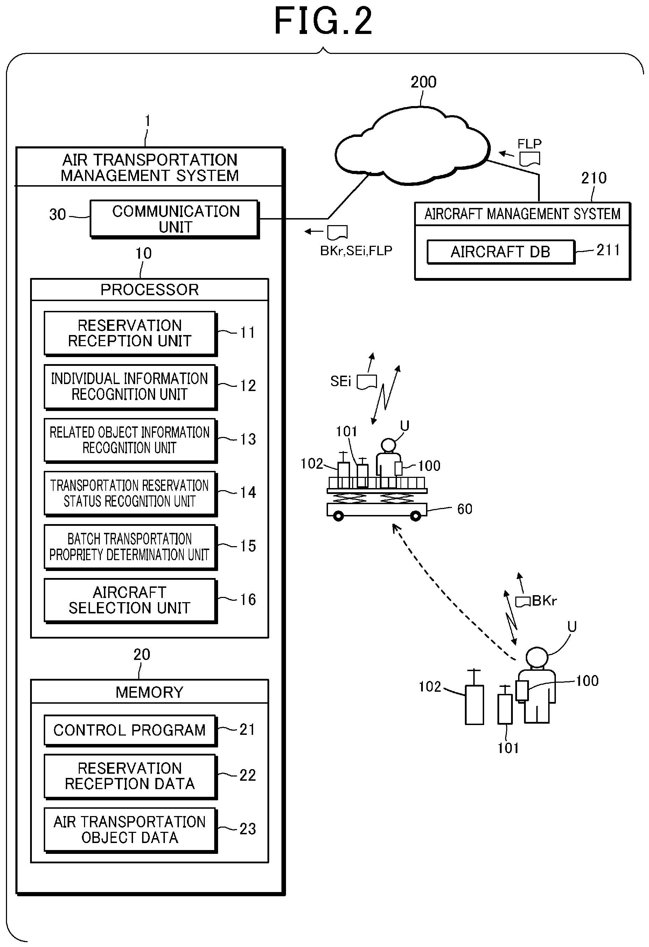

A configuration of the air transportation management system 1 will be described, by referring to FIG. 2. The air transportation management system 1 is a computer system that includes a processor 10, a memory 20, and a communication unit 30. The communication unit 30 performs communication between the user terminal 100, the transportation vehicle 60, and the aircraft management system 210, via the communication network 200.

A control program 21 of the air transportation management system 1, reservation reception data 22 in which the reservation request information Bkr transmitted from the user terminal 100 is recorded, and air transportation object data 23 in which the measurement information SEi of the air transportation objects (in FIGS. 1 and 2, the user U and the luggage 101, 102) transmitted from the transportation vehicle 60 is recorded, are stored in the memory 20.

The processor 10 functions as a reservation reception unit 11, an individual information recognition unit 12, a related object information recognition unit 13, a transportation reservation status recognition unit 14, a batch transportation propriety determination unit 15, and an aircraft selection unit 16, by reading and executing the control program 21.

The reservation reception unit 11 records, in the reservation reception data 22, the reservation request information BKr transmitted from the user terminal 100, by receiving this information by the communication unit 30, and the reservation reception unit 11 arranges the aircraft reservation by the user U. The individual information recognition unit 12 records, in the air transportation object data 23, the measurement information SEi of the size and weight of each of the air transportation objects transmitted from the transportation vehicle 60, by receiving this information by the communication unit 30, and the individual information recognition unit 12 recognizes the individual information that includes the size and weight of each of the air transportation objects. The related object information recognition unit recognizes the information of the related objects (such as the user and the luggage of the user), which are the air transportation objects associated with each other.

The transportation reservation status recognition unit 14 acquires the aircraft information FLP, which shows a flight plan and a reservation status of each aircraft scheduled for operation, by accessing the aircraft DB 211, and the transportation reservation status recognition unit 14 recognizes the flight plan and the reservation status of each aircraft. The batch transportation propriety determination unit 15 determines whether or not batch transportation of the related objects is possible by the reserved aircraft, based on the reservation status of the reserved aircraft and the individual information of the related objects. The aircraft selection unit 16 selects an aircraft to transport the air transportation objects, based on the presence or absence of the related objects and a determination result by the batch transportation propriety determination unit 15.

### [3. Reservation reception process]

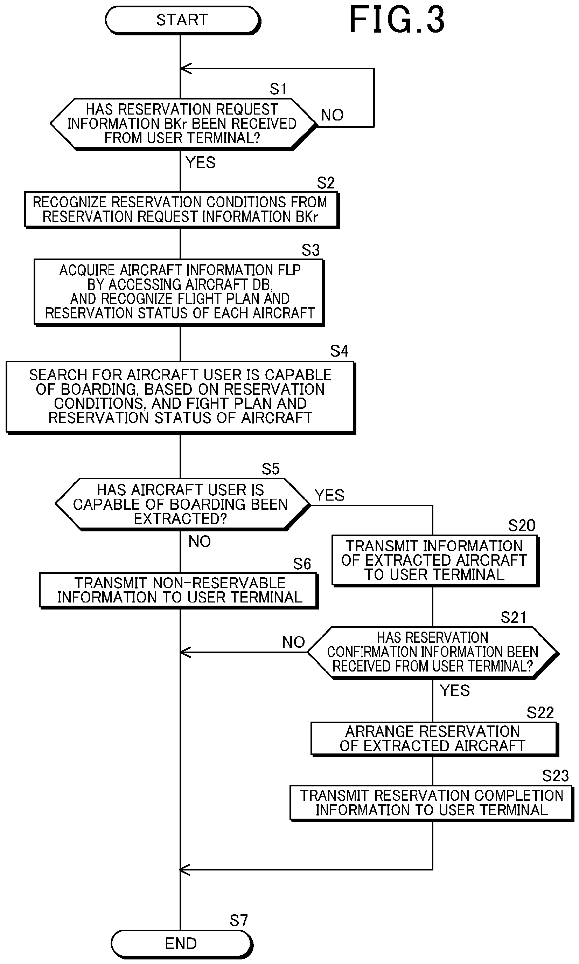

A reservation reception process executed by the air transportation management system 1, in the circumstances shown in FIGS. 1 and 2, will be described in accordance with a flowchart shown in FIG. 3.

In step S1 of FIG. 3, the reservation reception unit 11 advances the process to step S2, at the time when the reservation reception unit 11 receives the reservation request information BKr transmitted from the user terminal 100. In step S2, the reservation reception unit 11 recognizes the reservation conditions indicated by the user U, from the reservation request information BKr. To continue, in step S3, the reservation reception unit 11 acquires the aircraft information FLP by accessing the aircraft DB 211, and the reservation reception unit 11 recognizes a flight plan and a reservation status of each aircraft.

Next, in step S4, the reservation reception unit 11 searches for an aircraft capable of being boarded by the user U, based on the reservation conditions, and the flight plan and the reservation status of the aircraft. Next, in step S5, the aircraft selection unit 16 advances the process to step S20, at the time when an aircraft capable of being boarded by the user U is extracted, and advances the process to step S6, at the time when an aircraft capable of being boarded by the user U is not extracted. In the example of FIG. 1, the first aircraft 50a is extracted as an aircraft capable of being boarded by the user U.

In step S6, the reservation reception unit 11 transmits non-reservable information, which notifies that there is no aircraft satisfying the reservation conditions, to the user terminal 100. In this case, the user U makes a correspondence such as requesting a reservation again by changing the reservation conditions, by the reservation app.

Moreover, in step S20, the reservation reception unit 11 transmits information of the extracted aircraft to the user terminal 100. To continue, in step S21, the reservation reception unit 11 advances the process to step S22, at the time when the reservation reception unit 11 receives reservation confirmation information that indicates a request of a reservation, from the user terminal 100, and the reservation reception unit 11 advances the process to step S7, at the time when the reservation reception unit 11 does not receive the reservation confirmation information.

In step S22, the reservation reception unit 11 arranges a reservation of the first aircraft 50a, by transmitting reservation arrangement information of the first aircraft 50a to the aircraft management system 210. To continue, in step S23, the reservation reception unit 11 transmits reservation completion information, which notifies that a reservation of the first aircraft 50a is completed, to the user terminal 100.

### [4. Selection process of aircraft for air transportation objects]

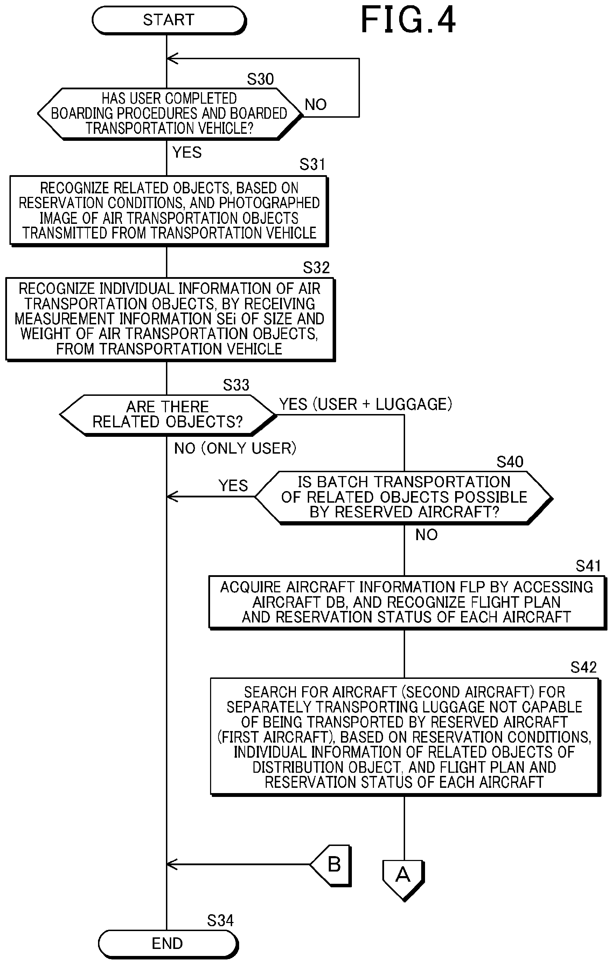

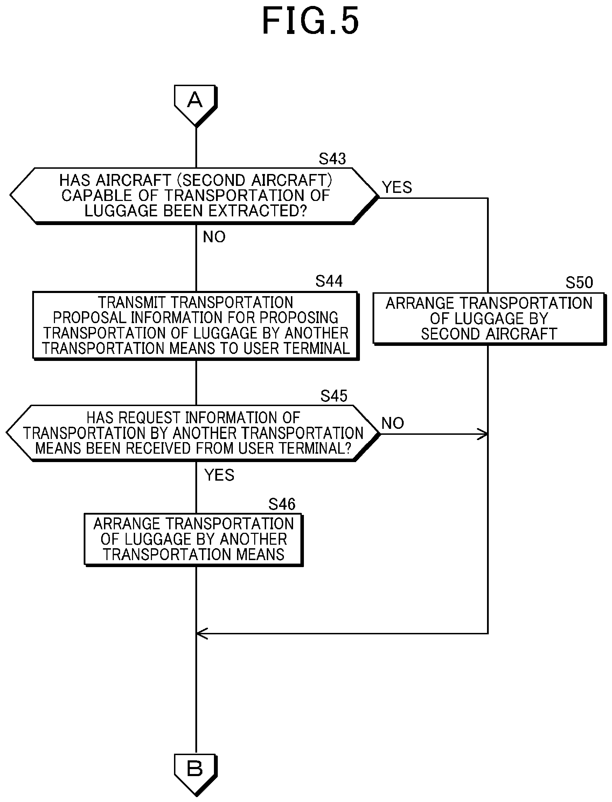

The procedures of a selection process of aircraft for the air transportation objects, executed by the air transportation management system 1, in the circumstances shown in FIGS. 1 and 2, will be described in accordance with flowcharts shown in FIGS. 4 and 5.

In step S30 of FIG. 4, the related object information recognition unit 13 advances the process to step S31, at the time when the related object information recognition unit 13 recognizes that the user U has boarded the transportation vehicle 60 by completing boarding procedures, by communication with the transportation vehicle 60. In step S31, the related object information recognition unit 13 recognizes information of the related objects (presence or absence of the related objects, itemization of the related objects and the like), based on the reservation conditions of the user U and a photographed image of each of the air transportation objects transmitted from the transportation vehicle 60. In the examples of FIGS. 1 and 2, the related object information recognition unit 13 recognizes the user U and the luggage 101, 102 as the related objects.

To continue, in step S32, the individual information recognition unit 12 recognizes the individual information of the air transportation objects (in the examples of FIGS. 1 and 2, the user U and the luggage 101, 102), by receiving the measurement information SEi transmitted from the transportation vehicle 60.

Next, in step S33, the aircraft selection unit 16 determines the presence or absence of the related objects based on the information recognized by the related object information recognition unit 13, and the aircraft selection unit 16 advances the process to step S40, at the time when there are related objects. On the other hand, at the time when there are no related objects, the aircraft selection unit 16 advances the process to step S34, and in this case, different to the circumstances of FIGS. 1 and 2, it is a case in which the user U does not carry luggage, and therefore the user U boards the reserved aircraft with no problems.

Step S40 onwards are processes corresponding to the case in which there are related objects (the user U and the luggage 101, 102), such as shown in FIGS. 1 and 2. To continue, in step S40, the batch transportation propriety determination unit 15 determines whether or not batch transportation of the related objects is possible by the reserved aircraft, based on the reservation conditions, the individual information of the related objects (the user U and the luggage 101, 102), and the flight plan and the reservation status of each aircraft.

Then, the batch transportation propriety determination unit 15 advances the process to step S34, at the time when batch transportation of the related objects is possible by the reserved aircraft, and the batch transportation propriety determination unit 15 advances the process to step S41, at the time when batch transportation of the related objects is not possible by the reserved aircraft. The aircraft selection unit 16, basically, perform searching for an available aircraft without being separated from the user U for luggage (carry-on luggage or the like in which articles to be immediately used by the user U, after arrival, are stored) that the user U has indicated transportation by the aircraft boarded by the user U, at the time of a reservation request, and for the remaining luggage, searches for a different aircraft capable of transportation.

In the example of FIG. 1, a case is shown in which it is determined that the user U and the luggage 101 are capable of being transported by the first aircraft 50a, which is the reserved aircraft, and the luggage 102 cannot be transported by the first aircraft 50a. Hereinafter, this case will be described.

In step S41, the aircraft selection unit 16 acquires the aircraft information FLP by accessing the aircraft DB 211, and the aircraft selection unit 16 recognizes the flight plan and the reservation status of each aircraft. To continue, in step S42, the aircraft selection unit 16 searches for an aircraft (second aircraft) capable of transporting the luggage 102, from among aircrafts satisfying the above first condition and second condition, based on the reservation conditions, the individual information of related objects (here, the luggage 102) of the distribution object, and the flight plan and the reservation status of each aircraft. Next, in step S43 of FIG. 5, the aircraft selection unit 16 advances the process to step S50, at the time when the second aircraft capable of transportation of the luggage is extracted, and the aircraft selection unit 16 advances the process to step S44, at the time when the second aircraft capable of transportation of the luggage is not extracted.

In step S50, the aircraft selection unit 16 arranges transportation of the luggage by the second aircraft, by transmitting luggage transportation request information, which requests transportation of the luggage by the second aircraft, to the aircraft management system 210. In this way, as shown in FIG. 1, the user U and the luggage 101 are transported by the first aircraft 50a, and the luggage 102 is transported by the second aircraft 50b.

In step S44, the aircraft selection unit 16 transmits, to the user terminal 100, transportation proposal information, which proposes transportation of the luggage by another transportation means other than an aircraft. To continue, in step S45, the aircraft selection unit 16 advances the process to step S46, at the time when the aircraft selection unit 16 receives request information of transportation of the luggage by the another transportation means, from the user terminal 100, and the aircraft selection unit 16 advances the process to step S34 of FIG. 4, at the time when the aircraft selection unit 16 does not receive the request information of transportation by the another transportation means. The another transportation means is a vehicle, railway or the like, and the aircraft selection unit 16 requests transportation of the luggage to a forwarding agent or the like by a vehicle.

### [5. Other embodiments]

In the above embodiment, while an example is shown in which the related objects are transported by distributing to the first aircraft 50a and the second aircraft 50b, the related objects may be transported by distributing to the first aircraft 50a and multiple second aircrafts.

Moreover, in the case where the related objects, which include the user U, are transported by distributing to the first aircraft 50a and the second aircraft 50b, the aircraft selection unit 16 may preferentially assign the user U to an aircraft, from among the first aircraft 50a and the second aircraft 50b, for which a flight plan is performed near to the arrival date/time and arrival site indicated by the user U at the time of the reservation request.

In the above embodiment, while a case is exemplified in which the related objects are the user U and the luggage 101, 102 of the user U, in the case where the related objects are multiple users (a group of users), or in the case where the related objects are multiple pieces of luggage, the related objects can be arranged to be transported by distributing to the first aircraft 50a and the second aircraft 50b, or to the first aircraft 50a and a transportation means other than an aircraft, by the same process.

In the above embodiment, the individual information recognition unit 12 recognizes the individual information of the air transportation objects, based on the measurement information Sei transmitted from the transportation vehicle 60. As another embodiment, the individual information recognition unit 12 may recognize the individual information of the air transportation objects, based on the measurement data of the size and weight of each of the air transportation objects, by the camera and the weight sensor provided in the waiting area Ar1.

In the above embodiment, from among the user U and the luggage 101, 102, which are the related objects, the luggage 102, which cannot be transported by the first aircraft 50a, is transported, by the second aircraft 50b, to the arrival site Ar5 (corresponding to a second site of the present application) near to the arrival site Ar4 (corresponding to a first site of the present application) of the first aircraft 50a. As another embodiment, in the case where the luggage 102 is transported by another transportation means such as a vehicle, in accordance with a demand of the user U, such as shown in steps S44 to S46 of FIG. 5, the luggage 102 may be transported to a site (corresponding to the second site of the present application) separated from the arrival site Ar4 of the first aircraft 50a, such as the home of the user U or an accommodation facility used by the user U.

Moreover, in the flowcharts of FIGS. 4 and 5, in the case where the aircraft selection unit 16 determines that batch transportation of the related objects is not possible by the reserved aircraft in step S40, the aircraft selection unit 16 searches for a second aircraft for separately transporting the luggage in steps S41 and S42, and at the time when the second aircraft is not extracted, the aircraft selection unit 16 performs a proposal and arrangement of transportation of the luggage by another transportation means in steps S44 to S46 of FIG. 5. As another embodiment, in the case where the aircraft selection unit 16 determines that batch transportation of the related objects is not possible in step S40, by reversing the execution order of a search for a second aircraft and an arrangement of another transportation means, the aircraft selection unit 16 first executes the processes of steps S44 to S46 of FIG. 5, and at the time when the aircraft selection unit 16 does not receive request information in step S45, the aircraft selection unit 16 may perform a search for the second aircraft by executing the processes of steps S41 to S43. In this way, if transporting the luggage 102 in the example of FIG. 1 to the home or the like of the user U, that is separated from the arrival site Ar4, for example, matches the needs of the user U, by first performing a proposal of an arrangement by another transportation means before a search for a second aircraft, in the case where this transportation need can be determined beforehand based on a recognition result by the related object information recognition unit 13, the convenience of the user U can be expected to improve.

Note that, FIG. 2 is a schematic view showing the functional configurations of the air transportation management system 1 divided by main process content, in order to simplify understanding of the present application invention, and the configuration of the air transportation management system 1 may be configured by a different division arrangement. Moreover, the process of each constitution element may be executed by one hardware unit, or may be executed by multiple hardware units. Moreover, the process by each constituent element shown in FIGS. 3 and 4 may be executed by one program, or may be executed by multiple programs.

### [Configurations supported by embodiment]

The embodiment has the following specific configurations.

(Configuration 1) An air transportation management system includes an individual information recognition unit for recognizing individual information including a size and weight of each of air transportation objects scheduled for transportation by an aircraft, a related object information recognition unit for recognizing information of related objects that are the air transportation objects associated with each other, a transportation reservation status recognition unit for recognizing a transportation reservation status of each of the air transportation objects in an aircraft, a batch transportation propriety determination unit for determining a presence or absence of an aircraft capable of batch transportation of all of the related objects based on the individual information and the transportation reservation status of each of the related objects, and an aircraft selection unit for selecting an aircraft to transport the related objects based on a determination result by the batch transportation propriety determination unit.

According to the air transportation management system of Configuration 1, distribution of multiple air transportation objects to an aircraft can be more appropriately performed, by determining a presence or absence of an aircraft capable of batch transportation of the related objects, and selecting an aircraft to transport the related objects.

(Configuration 2) The air transportation management system described in Configuration 1, wherein in the case where the batch transportation propriety determination unit determines that there is no aircraft capable of batch transportation of the related objects, the aircraft selection unit selects a first aircraft capable of transportation of a portion of the related objects, and selects a second aircraft or another transportation means other than an aircraft capable of transportation of a remaining portion of the related objects.

According to the air transportation management system of Configuration 2, the related objects can be transported by distributing to the first aircraft and the second aircraft or the another transportation means, in the case where there is no aircraft capable of batch transportation of the related objects.

(Configuration 3) The air transportation management system described in Configuration 2, wherein in the case where a transportation destination of the portion of the related objects by the first aircraft is a first site, and an arrival date/time to the first site of the portion of the related objects by the first aircraft is a first date/time, the aircraft selection unit selects the second aircraft or the another transportation means capable of transporting the remaining portion of the related objects at a second site having a distance with the first site within a predetermined distance, and at a second date/time having a time difference with the first date/time within a predetermined time.

According to the air transportation management system of Configuration 3, a combination of the first aircraft, and the second aircraft or the another transportation means, can be selected, with a transportation destination that is near, and with little time difference of an arrival date/time to the transportation destination, in the case where distributing and transporting the related objects.

(Configuration 4) The air transportation management system described in Configuration 2 or 3, wherein in the case where a user who has performed a transportation reservation of the related objects is included in the related objects, the aircraft selection unit preferentially assigns the user to the first aircraft complying with a desired use date/time by the transportation reservation.

According to the air transportation management system of Configuration 4, the user who has performed the transportation reservation can be transported, by preferentially assigning the user to a first aircraft.

(Configuration 5) The air transportation management system described in any one of Configurations 2 to 4, wherein in the case where a user who has performed a transportation reservation of the air transportation objects, and luggage requested to be transported at the same time at the time of the transportation reservation or carried by the user, are included in the related objects, the aircraft selection unit selects the first aircraft capable of transportation of the user and the luggage.

According to the air transportation management system of Configuration 5, convenience of the user can be facilitated, by ensuring that luggage assumed to have a high probability of being used by the user, at a transportation destination, is delivered along with the user.

(Configuration 6) The air transportation management system described in any one of Configurations 1 to 5, wherein the individual information recognition unit recognizes the individual information by acquiring measurement information of a size and weight of each of the air transportation objects transmitted from a transportation vehicle for transporting the air transportation objects by land, the size and weight being obtained by measurement in the transportation vehicle.

According to the air transportation management system of Configuration 6, the individual information of the air transportation objects can be recognized, by more efficiently measuring the size and weight of each of the air transportation objects, when transferring the air transportation objects by land.

(Configuration 7) The air transportation management system described in any one of Configurations 2 to 5, wherein the individual information recognition unit recognizes the individual information by acquiring measurement information of a size and weight of each of the air transportation objects transmitted from a transportation vehicle for transporting the air transportation objects by land, the size and weight being obtained by measurement in the transportation vehicle, and the air transportation management system includes a related object transfer arrangement unit for arranging a transfer by the transportation vehicle of a portion of the related objects to a loading location of the first aircraft, and a transfer by the transportation vehicle of a remaining portion of the related objects to the second aircraft or the another transportation means, in the case where the first aircraft and the second aircraft or the another transportation means are selected by the aircraft selection unit.

According to the air transportation management system of Configuration 7, the related objects can be more efficiently delivered to each loading location, by loading the related objects on the transportation vehicle.

### Reference Signs List

- 1: Air Transportation Management System
- 10: Processor
- 11: Reservation Reception Unit
- 12: Individual Information Recognition Unit
- 13: Related Object Information Recognition Unit
- 14: Transportation Reservation Status Recognition Unit
- 15: Batch Transportation Propriety Determination Unit
- 16: Aircraft Selection Unit
- 20: Memory
- 21: Control Program
- 22: Reservation Reception Data
- 23: Air Transportation Object Data
- 30: Communication Unit
- 50a: First Aircraft
- 50b: Second Aircraft
- 60: Transportation Vehicle
- 100: User Terminal
- 101, 102: Luggage
- 200: Communication Network
- 210: Aircraft Management System
- 211: Aircraft DB
- U: User

## Claims

1. An air transportation management system, **characterized by** comprising:
an individual information recognition unit (12) for recognizing individual information including a size and weight of each of air transportation objects scheduled for transportation by an aircraft;
a related object information recognition unit (13) for recognizing information of related objects that are the air transportation objects associated with each other;
a transportation reservation status recognition unit for recognizing a transportation reservation status of each of the air transportation objects in an aircraft;
a batch transportation propriety determination unit for determining a presence or absence of an aircraft capable of batch transportation of all of the related objects based on the individual information and the transportation reservation status of each of the related objects; and
an aircraft selection unit for selecting an aircraft to transport the related objects based on a determination result by the batch transportation propriety determination unit.

2. The air transportation management system according to claim 1, wherein
in the case where the batch transportation propriety determination unit determines that there is no aircraft capable of batch transportation of the related objects, the aircraft selection unit selects a first aircraft capable of transportation of a portion of the related objects, and selects a second aircraft or another transportation means other than an aircraft capable of transportation of a remaining portion of the related objects.

3. The air transportation management system according to claim 2, wherein
in the case where a transportation destination of the portion of the related objects by the first aircraft is a first site, and an arrival date/time to the first site of the portion of the related objects by the first aircraft is a first date/time, the aircraft selection unit selects the second aircraft or the another transportation means capable of transporting the remaining portion of the related objects at a second site having a distance with the first site within a predetermined distance, and at a second date/time having a time difference with the first date/time within a predetermined time.

4. The air transportation management system according to claim 2 or claim 3, wherein
in the case where a user who has performed a transportation reservation of the related objects is included in the related objects, the aircraft selection unit preferentially assigns the user to the first aircraft complying with a desired use date/time by the transportation reservation.

5. The air transportation management system according to any one of claim 2 to claim 4, wherein
in the case where a user who has performed a transportation reservation of the air transportation objects, and luggage requested to be transported at the same time at the time of the transportation reservation or carried by the user, are included in the related objects, the aircraft selection unit selects the first aircraft capable of transportation of the user and the luggage.

6. The air transportation management system according to any one of claim 1 to claim 5, wherein
the individual information recognition unit recognizes the individual information by acquiring measurement information of a size and weight of each of the air transportation objects transmitted from a transportation vehicle for transporting the air transportation objects by land, the size and weight being obtained by measurement in the transportation vehicle.

7. The air transportation management system according to any one of claim 2 to claim 5, wherein
the individual information recognition unit recognizes the individual information by acquiring measurement information of a size and weight of each of the air transportation objects transmitted from a transportation vehicle for transporting the air transportation objects by land, the size and weight being obtained by measurement in the transportation vehicle, and the air transportation management system comprises a related object transfer arrangement unit for arranging a transfer by the transportation vehicle of a portion of the related objects to a loading location of the first aircraft, and a transfer by the transportation vehicle of a remaining portion of the related objects to the second aircraft or the another transportation means, in the case where the first aircraft and the second aircraft or the another transportation means are selected by the aircraft selection unit.
